# EUROPÄISCHE PATENTSCHRIFT

(11) **EP 3 928 398 B1**
(45) Veröffentlichungstag und Bekanntmachung des Hinweises auf die Patenterteilung: **13.12.2023**
(21) Anmeldenummer: 20706242.3
(22) Anmeldetag: 20.02.2020
(51) Int. Cl.: H02G 11/00, B60R 16/027, H02G 11/02

(54) **WICKELFEDERKASSETTE**
COIL SPRING CASSETTE
CASSETTE À RESSORT EN SPIRALE

(30) Priorität: 23.02.2019 DE 102019001311
(43) Veröffentlichungstag der Anmeldung: 29.12.2021
(73) Patentinhaber: KOSTAL Automobil Elektrik GmbH & Co. KG, 58513 Lüdenscheid (DE)
(72) Erfinder: MOLDENHAUER, Knut, 58097 Hagen (DE); KLEINE, Raphael, 44789 Bochum (DE)
(74) Vertreter: Kerkmann, Detlef
(86) Internationale Anmeldenummer: PCT/EP2020/054444
(87) Internationale Veröffentlichungsnummer: WO 2020/169715

(56) Entgegenhaltungen:
- DE-A1- 4 121 284
- JP-B2- 4 518 354
- US-A1- 2012 126 047
- US-A1- 2014 263 801

## Beschreibung

Die vorliegende Erfindung betrifft eine Wickelfederkassette für das Lenkrad eines Kraftfahrzeugs mit einem feststehenden zylindrischen Statorgehäuseteil und einem koaxial zu diesem angeordneten, um seine Längsachse drehbaren, zylindrischen Rotorgehäuseteil, wobei ein durch die äußere Mantelfläche des innen liegenden Gehäuseteils und die innere Mantelfläche des außen liegenden Gehäuseteils begrenzte Kammer gebildet ist, in der zumindest ein, elektrische Leiter aufweisendes, flexibles Flachkabel angeordnet ist.

Wickelfederkassetten dienen dazu, elektrische Verbindungen zwischen zwei Gegenständen zu schaffen, von denen der eine gegenüber dem anderen verdrehbar angeordnet ist. Dazu weisen Wickelfederkassetten ein Statorgehäuseteil und ein Rotorgehäuseteil auf, zwischen denen mindestens ein Flachkabel angeordnet ist. Jeweils ein Ende des Flachkabels ist mit dem Statorgehäuseteil und mit dem Rotorgehäuseteil mechanisch und elektrisch verbunden. Bei einer Drehbewegung des Rotorgehäuseteils gegen das Statorgehäuseteil verschiebt sich das in mehreren Lagen im sogenannten Wickelspalt zwischen den Gehäuseteilen angeordnete Flachkabel innerhalb des Wickelspalts.

Eine derartige Wickelfederkassette ist aus der Druckschrift DE 41 21 284 A1 bekannt. Das Dokument beschreibt eine elektrische Verbindungseinrichtung für eine Lenkeinrichtung in einem Kraftfahrzeug. Diese hat ein ortsfestes Glied, ein hierzu relativ rotierbares, auf dem ortsfesten Glied sitzendes Glied mit einem elektrischen Kabel dazwischen, sowie auch das Kabel aufnehmende Teile oder Nuten, so dass eine effektive elektrische Verbindung zwischen rotierbarem und ortsfestem Teil in jeder Drehstellung des Lenkrades gewährleistet ist. Hierbei ist ein Teil des Kabels in einer Richtung entweder auf dem ortsfesten Glied oder dem rotierbaren Glied aufgewickelt, während ein anderer Teil des Kabels in einer Wickelrichtung, die der ersteren entgegengesetzt ist, auf einen anderen Bereich des ortsfesten Gliedes beziehungsweise des rotierbaren Gliedes aufgewickelt ist.

Es sind diverse Anordnungen eines Flachkabels im Wickelspalt einer Wickelfederkassette bekannt, die sich im Wesentlichen auf zwei Grundformen zurückführen lassen. Die erste Grundform sieht eine spiralförmige Anordnung des Flachkabels ("Clockspring-Prinzip") mit einer einheitlichen Wicklungsrichtung vor. Bei der zweiten Grundform ist eine Wicklungsrichtungsumkehr vorgesehen, bei der das Flachkabel eine u-förmige Wendestelle aufweist ("U-Turn-Prinzip"), die sich beim Verdrehen des Rotorgehäuseteils am Flachkabel und innerhalb des Wickelspalts verschiebt.

Dabei haben sich Anordnungen nach dem U-Turn-Prinzip weitgehend durchgesetzt, da sie gegenüber Anordnungen nach dem Clockspring-Prinzip mehrere Vorteile aufweisen. So ermöglicht das U-Turn-Prinzip bei gleicher vorgesehener Drehweite des Rotorgehäuseteils die Verwendung eines deutlich kürzeren Flachkabels. Zudem können bis zu etwa acht unabhängige Flachkabel im gleichen Wickelspalt umlaufen, im Gegensatz zu maximal zwei Flachkabeln bei Clockspringanordnungen. Dieses ermöglicht eine erheblich größere Anzahl elektrischer Verbindungen zwischen dem Rotorgehäuseteil und dem Statorgehäuseteil, sowie eine relativ kleine Baugröße der Wickelfederkassette. Darüber hinaus zeichnen sich Wickelfederkassetten nach dem U-Turn-Prinzip durch eine geringere Geräuschentwicklung aus als vergleichbare Wickelfederkassetten mit spiralförmig angeordneten Flachkabeln.

Bei modernen Kraftfahrzeugen ergibt sich immer häufiger das Bedürfnis einer High-Speed-Datenübertragung (Ethernet, LVDS) in das Lenkrad. Hierfür geeignete Flachkabel weisen beispielsweise einseitig eine vollflächige Metallbeschichtung als sogenannte Kopplungsfläche auf. Diese für die High-Speed-Datenübertragung notwendigen, vergleichsweise dicken Flachkabel sind in Wickelfederkassetten nach dem U-Turn-Prinzip nicht mehr ohne Probleme einsetzbar, da hierbei relativ kleine Biegeradien vorausgesetzt werden.

Ähnliche Probleme ergeben sich, wenn über ein Flachkabel relativ große elektrische Ströme übertragen werden sollen und die Adern des Flachkabels entsprechend einen großen Querschnitt aufweisen und damit starr ausfallen.

In diesen Fällen ist eine Anordnung des Flachkabels nach dem Clockspring-Prinzip vorteilhaft, da hierbei deutlich größere Biegeradien möglich sind. Damit verliert man aber für viele andere Anwendungen die oben genannten Vorteile einer U-Turn-Anordnung.

Es stellte sich die Aufgabe, eine Wickelfederkassette zu schaffen, welche die Vorteile der Anordnung von Flachkabeln nach dem U-Turn-Prinzip und dem Clockspring-Prinzip miteinander verbindet.

Diese Aufgabe wird erfindungsgemäß dadurch gelöst, dass die Wickelfederkassette eine erste und eine zweite Kammer ausbildet, die gegeneinander abgeschlossen und entlang ihrer Längsachse zueinander parallel angeordnet sind, dass in der ersten Kammer mindestens ein erstes Flachkabel mit einer Wicklungsrichtungsumkehr und in der zweiten Kammer mindestens ein zweites Flachkabel mit einheitlicher Wicklungsrichtung vollständig angeordnet ist.

Mit dieser Lösung kann problemlos eine Highspeed-Datenübertragung in das Lenkrad über ein Flachkabel in Clockspring-Anordnung realisiert werden, während für andere Funktionen (beispielsweise Airbag oder Steuerung des Entertainment-Systems) weiterhin das U-Turn-Prinzip vorteilhaft zur Anwendung kommen kann.

Aus der Druckschrift JP 4518354 B2 ist eine Kabeltrommel bekannt, umfassend eine erste Komponente, die um eine Achse bezüglich einer zweiten Komponente drehbeweglich ist, und mindestens ein erstes Kabel, das an mindestens einer Stelle an der ersten Komponente befestigt ist, wobei das erste Kabel an mindestens einer Stelle an der zweiten Komponente befestigt ist und wobei das erste Kabel spiralförmig um die Achse gewickelt ist, wobei mindestens ein zweites Kabel spiralförmig um die Achse gewickelt und von dem ersten Kabel durch einen ersten Flansch senkrecht zu der Achse getrennt ist und wobei der erste Flansch eine Öffnung für die Durchführung des zweiten Kabels umfasst und an der zweiten Komponente befestigt ist.

Die Druckschriften US 2014/263801 A1 und US 2012/126047 A1 beschreiben jeweils eine Kabeltrommel, die eine interne elektrische Verbindung zwischen einem drehbeweglichen und einem feststehenden Teil aufweist. Diese Verbindung wird mittels eines auf- und abwickelbar angeordneten Flachkabels hergestellt, welches bei Drehung der Kabeltrommel seine Wicklungsrichtung umkehren kann. Daneben ist jeweils ein von der Kabeltrommel abwickelbares Kabel vorgesehen, welches eine einheitliche Wicklungsrichtung aufweist. Dieses Kabel ist nicht als Flachkabel beschrieben.

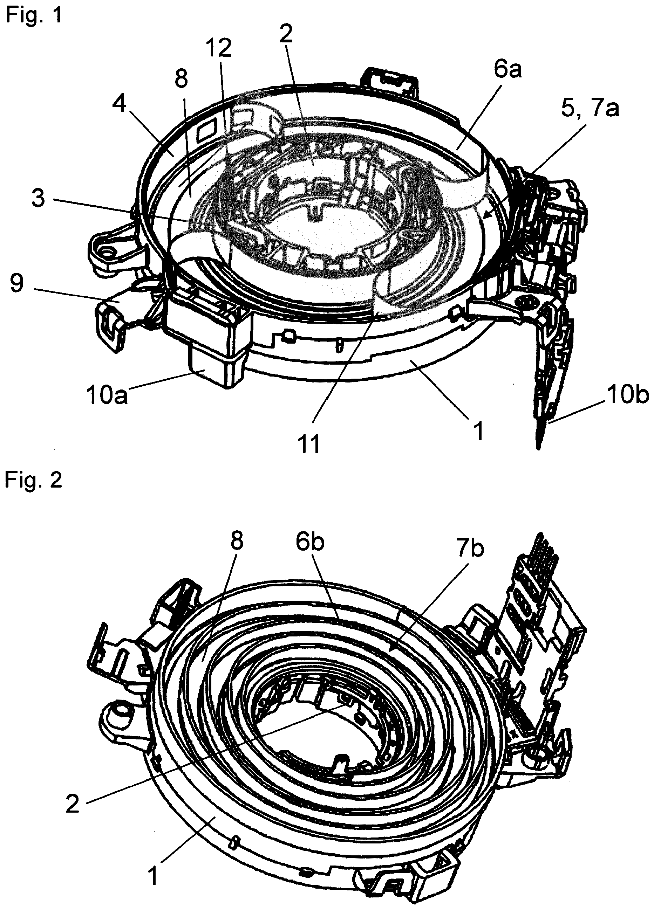

Ein Ausführungsbeispiel der Erfindung soll nachfolgend anhand der Zeichnung dargestellt und erläutert werden. Die Figuren 1 und 2 zeigen die Vorder- und Rückseite derselben Wickelfederkassette.

Die Wickelfederkassette besteht aus einem, hier außen liegenden Statorgehäuseteil 1, das beispielsweise mit feststehenden Elemente der Lenksäule eines Kraftfahrzeugs mechanisch verbunden werden kann und aus einem, konzentrisch zum Statorgehäuseteil 1 angeordneten, hier innen liegenden Rotorgehäuseteil 2, welches etwa an das Lenkrad des Kraftfahrzeugs mechanisch angekoppelt werden kann, so dass es bei Drehbetätigungen des Lenkrads gegen das Statorgehäuseteil 1 verdreht werden kann.

In der Figur 1 sind vier einzelne erste Flachkabel 6a erkennbar, die jeweils sowohl an äußeren Mantelfläche 3 des Rotorgehäuseteils 2 als auch an der inneren Mantelfläche 4 des Statorgehäuseteils 1 anliegen und bei einer Drehung des Rotorgehäuseteils 2 gegen das Statorgehäuseteil 1 an diesen Mantelflächen 3, 4 abrollen können. Beim Übergang zwischen den Mantelflächen 3, 4 kehrt jedes ersten Flachkabel 6a seine Wicklungsrichtung um und bildet dadurch eine Umkehrschleife 11, die sich bei einer relativen Drehung des Rotorgehäuseteils 2 durch den Zwischenraum zwischen den Mantelflächen 3, 4, den sogenannten Wickelspalt 5, bewegt.

Eine zum Statorgehäuseteil 1 gehörende horizontale Zwischenwand 8 und ein mit dem Rotorgehäuseteil 2 verbundenes, nicht dargestelltes Deckelteil ergänzen den Wickelspalt 5 zu einer ersten Kammer 7a, in der das mindestens eine erste Flachkabel 6a angeordnet ist. Alternativ kann die Zwischenwand auch als ein separates Bauteil ausgeführt sein.

Da der Wickelspalt 5 relativ eng ist, weisen die Umkehrschleifen 11 der ersten Flachkabel 6a einen relativ kleinen Biegeradius auf. Daher ist es erforderlich, dass die ersten Flachkabel 6a alle sehr flexibel und dadurch bedingt, relativ dünn ausgebildet sind. Hierdurch wiederum eignen sich die ersten Flachkabel 6a besonders für niederfrequente Signalübertragungen mit geringen elektrischen Stromstärken.

Sollen mit einer Wickelfederkassette auch höhere elektrische Stromstärken oder hochfrequente Datensignale übertragen werden, so werden dafür Flachkabel 6b benötigt, die wesentlich dicker und damit biegesteifer und weniger flexibel ausgebildet sind. Sie eignen sich daher weniger für eine Anordnung mit einer Wickelrichtungsumkehr, es sei denn, dass eine erhebliche bauliche Vergrößerung der Wickelfederkassette in Kauf genommen wird.

Die Lösung dieses Problems ist in der Figur 2 dargestellt und besteht darin, auf der Rückseite der horizontalen Zwischenwand 8 mindestens ein stärkeres zweites Flachkabel 6b in einer spiralförmigen Anordnung, und damit in einer einheitlichen Wicklungsrichtung anzuordnen.

Hierzu bilden die innere Mantelfläche 4 des Statorgehäuseteils 1 und die äußere Mantelfläche 3 des Rotorgehäuseteils 2 zusammen mit der Rückseite der horizontalen Zwischenwand 8 eine zweite Kammer 7b aus, die das mindestens eine zweite Flachkabel 6b aufnimmt.

Die Wickelfederkassette enthält somit sowohl erste Flachkabel 6a in einer U-Turn-Anordnung als auch zweit Flachkabel 6b in ein Clockspring-Anordnung, wobei die ersten und zweiten Flachkabel 6a, 6b deutlich unterschiedliche Eigenschaften aufweisen können. Die vorgeschlagene Wickelfederkassette kombiniert somit die vorteilhaften Eigenschaften beider Ausführungen auf vorteilhafte Weise.

Am Statorgehäuseteil 1 sind mechanische Verbindungselemente 9 zum Befestigen der Wickelfederkassette insbesondere in einem Kraftfahrzeug angeformt. Des Weiteren sind am Statorgehäuseteil 1 auch elektrische Verbindungselemente 10a, 10b erkennbar, über die elektrische Signale in die Flachkabel 6a, 6b eingespeist werden können.

Auch zum Rotorgehäuseteil 2 gehören elektrische Verbindungselemente 12.

### Bezugszeichen

- 1: Statorgehäuseteil (außen liegendes Gehäuseteil)
- 2: Rotorgehäuseteil (innen liegendes Gehäuseteil)
- 3: äußere Mantelfläche
- 4: innere Mantelfläche
- 5: Wickelspalt
- 6a: erste Flachkabel
- 6b: zweite Flachkabel
- 7a: erste Kammer
- 7b: zweite Kammer
- 8: horizontale Zwischenwand
- 9: mechanische Verbindungselemente
- 10a, 10b: elektrische Verbindungselemente
- 11: Umkehrschleife
- 12: elektrische Verbindungselemente

## Patentansprüche

1. Wickelfederkassette für das Lenkrad eines Kraftfahrzeugs, mit einem feststehenden zylindrischen Statorgehäuseteil (1) und einem koaxial zu diesem angeordneten, um seine Längsachse drehbaren, zylindrischen Rotorgehäuseteil (2), wobei eine durch die äußere Mantelfläche (3) des innen liegenden Gehäuseteils (2) und die innere Mantelfläche (4) des außen liegenden Gehäuseteils (1) begrenzte Kammer (7a, 7b) gebildet ist, in der zumindest ein, elektrische Leiter aufweisendes, flexibles Flachkabel (6a, 6b) angeordnet ist,
**dadurch gekennzeichnet,**
**dass** die Wickelfederkassette eine erste und eine zweite Kammer (7a, 7b) ausbildet, die gegeneinander abgeschlossen und entlang ihrer Längsachse zueinander parallel angeordnet sind,
**dass** in der ersten Kammer (7a) mindestens ein erstes Flachkabel (6a) mit einer Wicklungsrichtungsumkehr und in der zweiten Kammer (7b) mindestens ein zweites Flachkabel (6b) mit einheitlicher Wicklungsrichtung vollständig angeordnet ist.

2. Wickelfederkassette nach Anspruch 1, **dadurch gekennzeichnet, dass** das mindestens eine zweite Flachkabel (6b) in der zweiten Kammer (7b) zur Übertragung hochfrequenter digitaler Signale vorgesehen ist.

3. Wickelfederkassette nach Anspruch 1, **dadurch gekennzeichnet, dass** das mindestens eine zweite Flachkabel (6b) in der zweiten Kammer (7b) zur Übertragung relativ hoher elektrischer Ströme vorgesehen ist.

## Claims

1. Coil spring cassette for the steering wheel of a motor vehicle, having a stationary cylindrical stator housing part (1) and a cylindrical rotor housing part (2) which is arranged coaxially with the former and can be rotated about its longitudinal axis, a chamber (7a, 7b) being formed by the outer lateral surface (3) of the inner housing part (2) and the inner lateral surface (4) of the outer housing part (1) and in which at least one flexible flat cable (6a, 6b) having electrical conductors is arranged,
**characterized in that** the coil spring cassette forms a first and a second chamber (7a, 7b) which are closed off from one another and are arranged parallel to one another along their longitudinal axis,
and **in that** at least one first flat cable (6a) with a winding direction reversal is completely arranged in the first chamber (7a) and at least one second flat cable (6b) with a uniform winding direction is completely arranged in the second chamber (7b).

2. Coil spring cassette according to claim 1, **characterized in that** the at least one second flat cable (6b) is provided in the second chamber (7b) for transmitting high-frequency digital signals.

3. Coil spring cassette according to claim 1, **characterized in that** the at least one second flat cable (6b) is provided in the second chamber (7b) for transmitting relatively high electric currents.

## Revendications

1. Cassette à ressorts en spirale pour le volant d'un véhicule automobile, comprenant une partie de boîtier de stator (1) cylindrique fixe et une partie de boîtier de rotor (2) cylindrique disposée coaxialement à celle-ci et pouvant tourner autour de son axe longitudinal, une chambre (7a, 7b) délimitant la surface d'enveloppe extérieure (3) de la partie de boîtier (2) située à l'intérieur et la surface d'enveloppe intérieure (4) de la partie de boîtier (1) située à l'extérieur étant formée, dans laquelle est disposé au moins un câble plat (6a, 6b) flexible présentant des conducteurs électriques,
**caractérisé en ce que**, la cassette à ressorts en spirale forme une première et une deuxième chambre (7a, 7b) qui sont fermées l'une ar rapport à l'autre et disposées parallèlement l'une à l'autre le long de leur axe longitudinal,
qu'au moins un premier câble plat (6a) avec une inversion du sens d'enroulement est disposé complètement dans la première chambre (7a) et au moins un deuxième câble plat (6b) avec un sens d'enroulement uniforme est disposé complètement dans la deuxième chambre (7b).

2. Cassette à ressorts en spirale selon la revendication 1, **caractérisée en ce que** le au moins un deuxième câble plat (6b) est prévu dans la deuxième chambre (7b) pour la transmission de signaux numériques à haute fréquence.

3. Cassette à ressorts en spirale selon la revendication 1, **caractérisée en ce que** le au moins un deuxième câble plat (6b) est prévu dans la deuxième chambre (7b) pour transmettre des courants électriques relativement élevés.
